# EUROPEAN PATENT APPLICATION

(11) **EP 3 203 389 A1**
(43) Date of publication of application: **09.08.2017**
(21) Application number: 17152311.1
(22) Date of filing: 19.01.2017
(51) Int. Cl.: G06F 17/30

(54) **MANAGED PARENTAL CONTROLS**

(30) Priority: 03.02.2016 US 201615014671
(71) Applicant: BlackBerry Limited, Waterloo, ON N2K 0A7 (CA)
(72) Inventor: Debickes, Nicole Melissa, Boca Raton, FL 33323 (US); Parry, Thomas Owen, Cambridge, Ontario N1T 1H1 (CA); Carter, Jason Lee, Davie, FL 33331 (US)
(74) Representative: Hanna Moore + Curley

(57) **Abstract**

A system and method to filter content delivered to a device are disclosed. A birthdate for a user associated with a controlled device is received. Based on the birthdate, a present age of the user associated with the controlled device is determined. A request for content is received from the controlled device. An age rating associated with the content is compared to the present age of the user. The content is allowed to be delivered to the controlled device based on comparing the age rating to the present age of the user.

## Description

### FIELD OF THE DISCLOSURE

The present disclosure generally relates to monitoring communicated data, and more particularly to managed data content monitoring and access control processes.

### BACKGROUND

A wide variety of content is available over electronic communications, such as from any sites on the Internet, that can be presented to a user on many types of devices. A large variety of content has become available through electronic communications.

### SUMMARY

Accordingly there is provided a method, device and computer program as defined in the claims that follow.

### BRIEF DESCRIPTION OF THE DRAWINGS

The accompanying figures where like reference numerals refer to identical or functionally similar elements throughout the separate views, and which together with the detailed description below are incorporated in and form part of the specification, serve to further illustrate various embodiments and to explain various principles and advantages all in accordance with the present disclosure, in which:
FIG. 1 illustrates a local content monitoring and filtering configuration, according to an example;
FIG. 2 illustrates a public network content monitoring and filtering configuration according to an example;
FIG. 3 illustrates a filtering configuration information determination process, according to an example;
FIG. 4 illustrates a local router content request handling process, according to an example;
FIG. 5 illustrates a controlled device operation process, according to an example;
FIG. 6 illustrates content rating information, according to an example;
FIG. 7 illustrates a content filtering processor, according to an example; and
FIG. 8 is a block diagram of an electronic device and associated components in which the systems and methods disclosed herein may be implemented.

### DETAILED DESCRIPTION

As required, detailed embodiments are disclosed herein; however, it is to be understood that the disclosed embodiments are merely examples and that the systems and methods described below can be embodied in various forms. Therefore, specific structural and functional details disclosed herein are not to be interpreted as limiting, but merely as a basis for the claims and as a representative basis for teaching one skilled in the art to variously employ the present subject matter in virtually any appropriately detailed structure and function. Further, the terms and phrases used herein are not intended to be limiting, but rather, to provide an understandable description of the concepts.

The terms "a" or "an", as used herein, are defined as one or more than one. The term plurality, as used herein, is defined as two or more than two. The term another, as used herein, is defined as at least a second or more. The terms "including" and "having," as used herein, are defined as comprising (i.e., open language). The term "coupled," as used herein, is defined as "connected," although not necessarily directly, and not necessarily mechanically. The term "configured to" describes hardware, software or a combination of hardware and software that is adapted to, set up, arranged, built, composed, constructed, designed or that has any combination of these characteristics to carry out a given function. The term "adapted to" describes hardware, software or a combination of hardware and software that is capable of, able to accommodate, to make, or that is suitable to carry out a given function.

The below described systems and methods operate to monitor and control access to data content by various controlled devices. In an example, one or more controlled devices are identified and all content to those controlled devices is routed through a content filter. The content filter determines characterizations for the requested content and compares those characterizations to content filtering criteria defined for the requesting controlled device. If the characterizations indicate that the requested content does not satisfy the filtering criteria for the requesting controlled device, the content in one example is blocked from being delivered to the controlled device. Parents or guardians of children often desire to limit the type of content that their children can access and view or be otherwise exposed to. Techniques to limit or control access to various types of content can include various types of parental control functions. Parental controls and their configuration tools are often distributed over a number of websites, local device programs, at various other locations, or in combinations of these. Comprehensively controlling content, including movies, music, games, applications, other types of internet content, or combinations of these is generally quite difficult to manage and may call for attention at various times due to several factors. Difficulties in configuring parental control functions result in the control functions not being properly or fully configured, and therefore not providing the intended amount of control.

In an example, a control module defines and maintains configurations for various components of the content filter and updates those configurations as desired. These configurations are able to include filtering criteria for each controlled device. In an example, a parent or other administrator is able to simply enter the birthdate of a user associated with a particular controlled device and the central control facility will update the configuration of the content filter components as the user of the controlled device ages.

The content filter in some examples is able to receive ratings or other characterizations of content requested by a controlled device from external data sources. These ratings or other characterizations are able to include characterizations of the media relative to filtering parameters, such as the appropriate minimum age for the requested content, the age related subject matter within the content that causes the minimum age rating for the requested content to be established, other characterizations, or combinations of these.

The below described systems and methods in an example provide a straightforward ability for an administrator, such as parents or guardians or teachers, to control content that is accessed by their controlled devices such as devices used by the children. The below described systems and methods automatically allow the parental control functions to change as the user of the controlled device, such as a child, grows and the content they are allowed to view or otherwise consume changes. These systems and methods accommodate the circumstances, such as that the children being protected by the parental controls are growing and the configurations of their parental control functions need to change as the children mature. These systems and methods obviate the need for parents to manage the configurations of parental controls.

Management of parental controls to accommodate the child's maturing is generally performed very infrequently. The infrequency of updating these configurations may cause the parents to forget how to properly configure each parental control function being used. Parents may have to then spend considerable time and effort to re-learn how to configure the parental controls which can lead to parents not updating the configuration as often as they would like, cause to parents to not properly configure the parental control functions, cause the parents to put off updating the configuration for longer than desired, cause parents to give up on using one or more of the parental control functions all together, or combinations of these. In an example, the below described systems and methods allow the parent to set a child's name and birthday in a system so that configuration of the parental control functions can grow with the child. As time progresses and the child ages, the system automatically updates the current age of the child and automatically reconfigures all pertinent aspects of each parental control function to reflect the child's current age.

In some examples, a parent is able to specify a child's birth date for filtering content based on the age of the child. In further examples, the parent is also able to provide age limiting subject matter specifications for the content that is to be restricted from the user of a specified controlled device. For example, a video file is able to be rated according to the types subject matter that cause a particular age rating to be assigned to the video content. Such subject matter types are able to include, for example, indications that the video contains violence, sexual content, mature language, mature activities, or combinations of these. Video files or other content are also able to have age limiting subject matter indications that include, for example, themes that include positive role models or positive messages. Such subject matter that is considered positive is referred to as age limiting in this context since it is subject matter to be considered in making a more comprehensive decision as to whether the content should be delivered to a device of a user of a particular age. In general, content filtering used by the following systems and methods are able to be configured to filter content based on any one or more criteria in order to prevent content that is specified to be restricted from being delivered to the controlled device for a child.

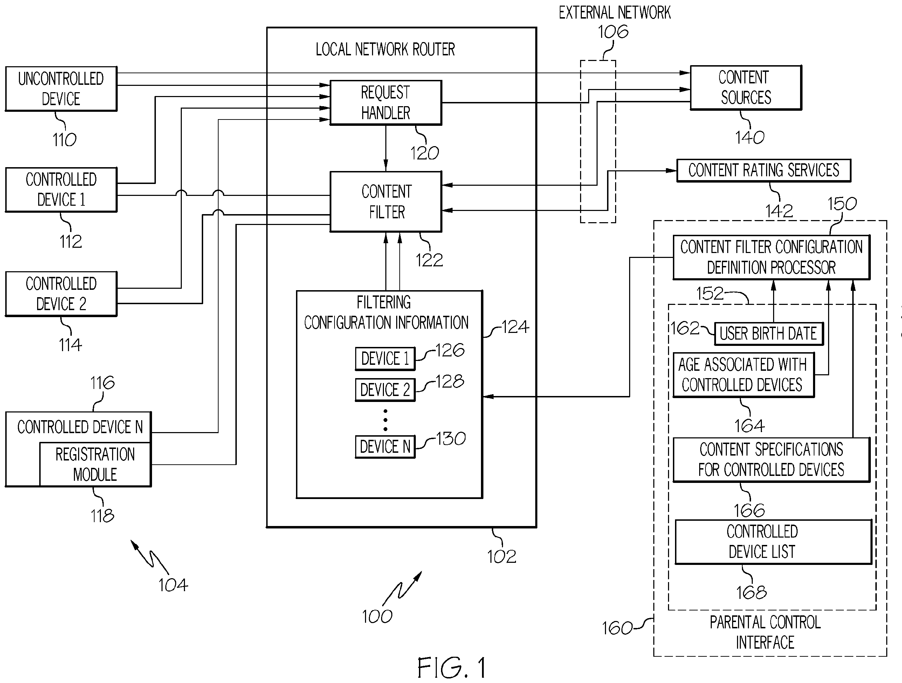

FIG. 1 illustrates a local content monitoring and filtering configuration 100, according to an example. The local content monitoring and filtering configuration 100 depicts a configuration of equipment used to monitor and filter content to specified controlled devices within a particular local network. In the illustrated example, a local network is connected to an external network via a local network router 102. In the illustrated local content monitoring and filtering configuration 100, the local network is able to be used by both specified controlled devices and also uncontrolled devices that are all able to access the external network. In an example, no content filtering based on content ratings associated with age is performed for the uncontrolled devices, although other filtering such as performed by firewall or other security processes is able to be performed for all data communications with any device on the local network.

The local content monitoring and filtering configuration 100 shows a local network router 102 which acts as a network gateway for a number of local devices 104. The illustrated local devices 104 include an uncontrolled device 110 and three controlled devices, a controlled device 1 112, controlled device 2 114, and a controlled device N 116. The illustrated controlled device N 116 includes a registration module 118 to allow the uncontrolled device N 116 to operate with external networks, as is described in more detail below.

In a further example, the functionality of a local network router 102 is able to be incorporated into a device that is associated with one or more controlled devices and that also performs further support operations for the associated devices. In an example, the below described functionality of the local network router 102 is able to be incorporated in a device that is separate from a controlled device, such as controlled device 112, but that contains at least some communications support components for that controlled device 112. In an example, this separate device is able to contain, for example, radio chipsets, antennas, and other such components, and implement a short range data connection to the controlled device in order to handle external communications, such as cellular traffic.

The local network router 102 in one example allows local devices 104 to exchange data with various data sources and servers over an external network 106. Processing components within the local network router 102 are also able in some examples to exchange data with various data sources and servers on the external network 106.

In the illustrated local content monitoring and filtering configuration 100, local devices 104 and components within the local network router 102 are able to communicate with content sources 140 over connections within the external network 106. In an example, content sources 140 include one or more data servers that allow users to retrieve various types of content for use by electronic devices. Examples of data that can be retrieved from content sources 140 include, e.g., movies, music, books, literature, any type of content or data, or combinations of these.

The local network router 102 includes a request handler 120 that receives requests for content or other data from any of the local devices 104. The request handler 120 in an example determines whether the request is from a controlled device, or from an uncontrolled device. In the case of a request for content that is received from an uncontrolled device, such as uncontrolled device 110, the content request is handled in one example according to normal router processing. In an example, the request handler 120 forwards a request from the uncontrolled device 110 to the content source 140 that has the requested content, and the content source 140 returns the content to the local network router 102. The local network router 102 then forwards that content to the uncontrolled device 110. In some examples the local network router 102 will apply firewall rules or other processing to some or all data being transferred through the local network router 102.

The request handler 120 of the local network router 102 in one example identifies requests for content that are received from controlled devices. In an example, controlled devices are able to be identified by any suitable technique, such as specification of identifications numbers associated with each controlled devices. In an example, controlled devices are able to be identified by specifying Ethernet or Media Access Controller (MAC) addresses of each controlled device. Further identification of a particular device is able to use any data contained on or otherwise associated with the particular device.

The request handler 120 in one example forwards requests for content received from controlled devices to the content filter 122. In an example, the content filter 122 determines if the requested content is to be blocked from being provided to the controlled device. If the content filter determines that the content is to be blocked from being provided to the controlled device, the content filter 122 will operate to prevent the requested content from being provided to the requesting controlled device. If the content filter determines that the requested content satisfies the criteria for content to be delivered to the requesting controlled device, the content filter 122 in one example will allow the request handler to forward the request to the appropriate content source within the content sources 140, thereby allowing the content to be returned to the requesting controlled device.

The content filter 122 in one example operates in conjunction with filtering configuration information 124. Filtering configuration information 124 in an example includes definitions of criteria for each controlled device. The filtering configuration information 124 is able to include, for example, the current age of the user of a controlled device, definitions of age limiting subject matter that may be allowed for the controlled device or that is to be specifically blocked from the controlled device, other specifications of criteria to be used to determine whether a particular type of content is to be provided to or blocked from a particular controlled device, other configuration information, or combinations of these.

The filtering configuration information 124 in an example includes filtering configuration information for each of the controlled devices within the local devices 104, which are controlled devices for which the local network router 102 is providing content filtering. The illustrated filtering configuration information 124 includes filtering configuration information sets that include a device 1 filtering configuration 126, a device 2 filtering configuration 128, and a device N filtering configuration 130. Each of these filtering configuration data sets is able to include individually specified criteria, such as the age of the user associated with each controlled device. In some examples, these filtering configuration data are also able to include or reference more general configuration information that is not necessarily tailored to the user of the controlled device. For example, the filtering configuration data for a particular controlled device may include or reference a specification of content sources that are to be blocked without regard to the age of the user of the device.

The illustrated local content monitoring and filtering configuration 100 includes a parental control interface 160. In various examples, the parental control interface 160 is able to be provided through any resource such as by a processor within the local network router, by a processor within the local network controlled by the local network router 102, by a processor external to the local network and accessible to the local network router 102 via an external network 106, by any other processor, or by combinations of these. The parental control interface 160 in various examples includes facilities to allow entry of data to determine filtering configuration information for each controlled device. In an example, the parental control interface 160 allows a parent or other administrator to enter data, such as the birthdate of a user of a controlled device, to support determining filtering configuration information for the various processes operating within a content filter 122.

The parental control interface 160 includes a content filter configuration definition processor 150. The content filter configuration definition processor 150 in one example controls operation of the parental control interface 160, supports entry of data to support determining filtering configuration information, stores such entered data, stores data determined by processing various data elements, and determines the filtering content configuration information for each controlled device based on the entered data. In various examples, the content filter configuration definition processor 150 is able to incorporate other data obtained from any suitable source in order to determine the filtering content information for each controlled device. The content filter configuration definition processor 150 in an example is able to communicate determined filtering content configuration information to the local network router 102 for storage into the filtering configuration information 124. During continuing operations, which are able to continue for any length of time including for many years in some cases, the content filter configuration definition processor 150 operates at times to determine any updates to the filtering configuration information for any controlled device. The content filter configuration definition processor 150 determines these updates to the filtering configuration information, or redefines the filtering configuration information, that is associated with one or more controlled devices as need. The content filter configuration definition processor 150 is then able to communicate any determined updates to the local network router 102 in order to update the filtering configuration information 124 of that local network router 102. The content filter configuration definition processor 150 in some examples is also able to perform other functions.

The content filter configuration definition processor 150 has a parental control interface memory 152. The parental control interface memory 152 stores information to support the operation of the content filter configuration definition processor 150. The parental control interface memory 152 is able to store data that is received by the content filter configuration definition processor 150, store data determined by the content filter configuration definition processor 150, store other data, or store combinations of these.

In an example, the content filter configuration definition processor 150 receives a birth date for a user associated with a controlled device. This birthdate is able to be received by any suitable technique, such as by a real or virtual keypad or by any other user input facility. In further examples, the birthdays are able to be obtained from any suitable data source. The entered or obtained birthday information is then stored in the user birthdays storage 162 of the parental control interface memory 152. The content filter configuration definition processor 150 in an example is configured to calculate the age of the user of each controlled device based on the birthday stored in the user birthdays storage 162. In an example, the content filter configuration definition processor 150 stores the determined age into the age associated with controlled devices storage 164 of the parental control interface memory 152.

In addition to storing the user's birth date and current age of the user, the parental control interface allows entry of an age difference to be applied to the actual current age of the user of a controlled device. In an example, a parent or other administrator is able to set an age difference that may be added (or subtracted) from the actual current age of the user when determining whether content is appropriate for the particular user. For example, a parent or other administrator is able to specify that content determined to be suitable for persons two years older than the current age of the user of a controlled device is able to be provided to the controlled device of that user. In an example where that user is thirteen years old, the content filter 122 will allow content rated as being suitable for persons fifteen years of age or younger to be delivered to that user's controlled device.

The parental control interface 160 in some examples also allows specifications of age limiting subject matter to be entered or provided by any suitable technique. An example of an age limiting subject matter is "mature language." In an example, a particular content selection may have a minimum suitable age only based on the type of language used in that content being determined to not be suitable for persons below that minimum age. In some examples, the content filtering specifications for a particular controlled device may indicate that content that is indicated as being unsuitable for the current age of the user of a controlled device only because of one or more particular types of specified age limiting subject matter is allowed to be delivered to the controlled device of that user. Any such age limiting subject matter definitions are stored in one example in a content specification for controlled device 166.

The parental control interface 160 allows specification of identification of controlled devices. The identifications of controlled devices are stored in a controlled device list 168. Entries in the controlled device list 168 are associated with other data stored in the parental control interface memory 152 such that each stored data item is associated with one or more particular controlled devices. Controlled devices are able to be identified by any suitable technique.

The content filter configuration definition processor 150 operates to define filtering configuration information sets for each controlled device. These determined filtering configuration information sets are provided to the local network router 102 and stored in the filtering configuration information storage 124. The content filter configuration definition processor 150 in an example operates from time to time to determine updates or new sets of filtering configuration information. For example, on a user's birthday, as determined by the information stored in the user birthdays 162, the content filter configuration definition processor 150 is able to define a new filtering configuration information set based on the user's new age. The data stored in the filtering configuration information storage 124 is then updated to reflect these new conditions.

As discussed above, the content filter 122 receives indications from the request handler 120 that a controlled device has requested content. Upon receiving such an indication, the content filter obtains age related rating information from content ratings sources 142. In an example, the content ratings sources 142 are able to specify a minimum age for which particular content is suitable, age limiting subject matter that causes the content to have that minimum suitable age rating, other information, or combinations of these. The content filter 122 in an example determines, based on the information for the requesting controlled device stored in the filtering configuration information 124, whether the requested content should be provided to the controlled device. If the content is determined to be provided to the controlled device, the content filter allows the request to proceed and the requested content is provided to the requesting controlled device. If it is determined that the content should not be provided, the requesting controlled device in an example is notified that the content is being blocked or is otherwise not available.

In various examples, the local network router 102 includes a data interface that implements interfaces with various components. In some examples, the data interface is able to consist of one data communications structure or multiple data communications structures that are each able to communicate with the various other devices. In various examples, the data interface performs data exchanges with components that are external to the local network router 102, internal to the local network router 102, or with components where some are external and others are internal to the local network router 102. In some examples, a data interface of the local network router 102 exchanges data with the content filter configuration definition processor 150 to receive, for example, birthdates and other configuration information to be used to define filtering configuration information 124. The data interface of that example further exchanges data with controlled devices to receive content requests and send content to the device. In an example, the data interface establishes a local area network connection between the controlled devices and the local network router 102 as is described above.

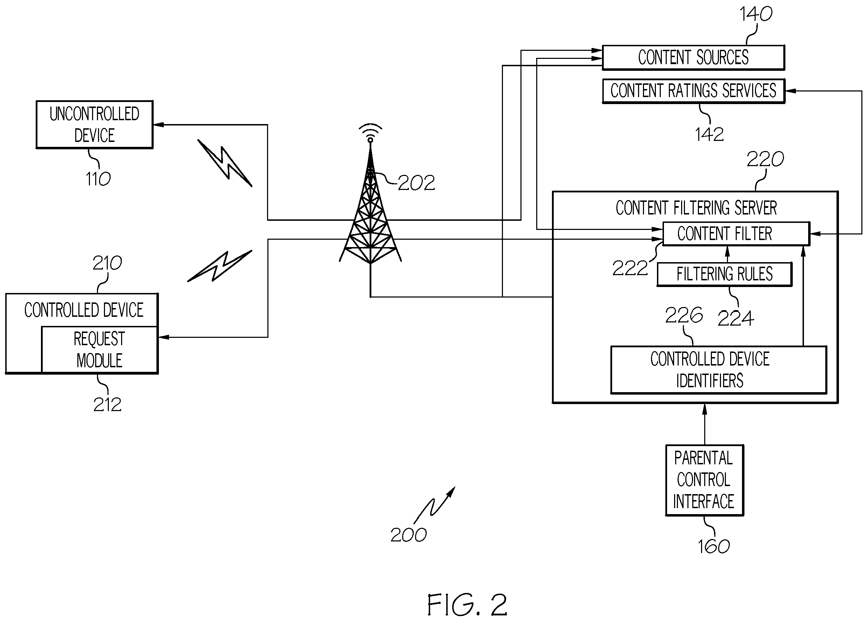

FIG. 2 illustrates a public network content monitoring and filtering configuration 200 according to an example. The public network content monitoring and filtering configuration 200 operates in a manner similar to the local content monitoring and filtering configuration 100 discussed above, but allows the controlled devices to access data communications via links or networks that are not controlled by a local network router 102. In an example, controlled devices are configured to communicate all requests for content through a content filtering server. That content filtering server determines whether the requested content is to be provided to or blocked from being provided to the requesting controlled device.

The public network content monitoring and filtering configuration 200 depicts a network access point 202 through which an uncontrolled device 110 and a public network controlled device 210 are shown to communicate. The network access point 202 in an example is able to be a network access point to any public network, such as the Internet. The network access point 202 in an example is able to be an access point for a local network that, in turn, allows connected devices to communicate with external networks such as the Internet. Although the illustrated network access point 202 is shown to be a wireless access point, in further examples any network connection is possible including network connections using wired links, combinations of wired and wireless links, any communications link, or combinations of these.

The uncontrolled device 110 in an example is able to communicate with devices, such as content sources 140, according to normal network communications techniques. The public network controlled device 210 in an example is configured to communicate through public network connections, such the network access point 202. The public network controlled device 210, however, is configured to route all requests for content through a content filtering server 220. In one example, the content filtering server 220 is a server that is accessible via a public communications network such as the Internet. In further examples, the content filtering server 220 is able to be accessible to controlled devices such as the illustrated public network controlled device 210 by any suitable technique or communications architecture.

The public network controlled device 210 in one example includes a request module 212. The request module 212 in an example includes processing within the public network controlled device 210 to ensure that requests for content are communicated to the content filtering server 220, and are not communicated via communications directly to the content sources 140. In one example, the request module 212 implements a data tunneling connection, such as a Virtual Private Network (VPN) connection, between the controlled device 210 and the content filtering server 220 so that the controlled device 210 routes all data communications through the content filtering server 220. In various examples, any type of data connection between the controlled devices and the content filtering server 220 is able to be used.

The content filtering server 220 operates in a manner similar to that described above with regards to the local network router 102. The content filtering server 220 includes a content filter 222 that receives content requests from controlled devices, such as the illustrated controlled device 210. The content filtering server 220 stores controlled device identifiers 226 to identify the controlled devices being served via the content filtering server 220. The content filtering server 220 further stores filtering rules 224 to define the criteria by which to decide if requested content should be provided to the requesting controlled device, or if that content should be denied to the requesting controlled device. In one example, each set of filtering rules within the stored filtering rules 224 is associated with a particular controlled device identifier that is stored in the controlled device identifiers 226. The content filter 222 determines, based on filtering rules 224, whether the particular requested content should be provided to the requesting controlled device. As is described above, the content filter 222 receives content rating information from content ratings services 142 and applies the filtering rules 224 associated with the requesting controlled device to determine whether the content should be provided or denied.

The content filtering server 220 of one example receives configuration information from a parental control interface 160. The parental control interface 160 is similar to that described above. In general, the parental control interface 160 is able to operate on any process, or be distributed among various processors. The parental control interface 160 operates to provide the controlled device identifiers of the controlled devices being served through the content filtering server 220, and also to determine and update the filtering rules for each controlled device as is described above. In an example, the parental control interface is able to receive a birthdate of user of a controlled device, and the filtering rules for that controlled device are updated as the person grows older over time.

. In various examples, the content filtering server 220 includes a data interface that implements interfaces with various components. In some examples, the data interface is able to consist of one data communications structure or multiple data communications structures that are each able to communicate the various other devices. In various examples, the data interface performs data exchanges with components that are external to the content filtering server 220, internal to the content filtering server 220, or with components where some are external and others are internal to the content filtering server 220. In some examples, a data interface of the content filtering server 220 exchanges data with the parental control interface 160 to receive, for example, birthdates and other configuration information to be used to define filtering rules 224 and controlled device identifiers 226. The data interface of that example further exchanges data with controlled devices to receive content requests and send content to the device. In an example, the data interface establishes a data tunneling connection, such as the VPN connection as is described above.

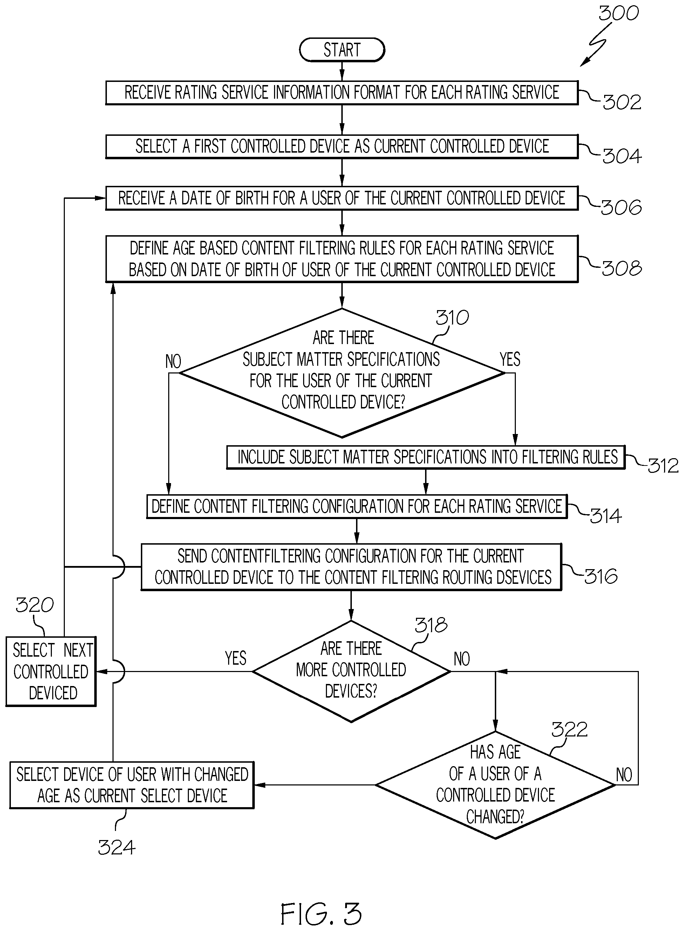

FIG. 3 illustrates a filtering configuration information determination process 300, according to an example. The filtering configuration information determination process 300 is an example of a process that determines filtering configuration information for content filtering processes that operate on various devices. The filtering configuration information determination process 300 of one example is performed by a content filter configuration definition processor 150, as is described above.

The filtering configuration information determination process 300 receives, at 302, rating service information format definitions for each rating service used by the various content filter processes. In some examples, the filtering configuration information determination process 300 is able to access different rating services to determine age related rating information about various types of content. For example, one or more content rating sources are able to provide rating information for movies, and one or more other rating services are able to provide age related rating information for games. In general, one or more content rating services are able to provide age related ratings information regarding various types of content, such a videos, movies, games, books, literature of various natures, educational material, other types of content, or combinations of these. In some examples, one content ratings service is able to provide age related content rating information for multiple types of content, while some may only provide age related content rating information for one type of content, such as movies. In general, different content ratings services may provide age related content rating information in different formats and that contain different types of details, such as identification of different types of categories age limiting subject matters that cause a particular content item to have a certain rating. In an example, a content rating service may indicate if the minimum recommended age for a content item is due to violence in the content. The information format for such a ratings service is able to list the categories of age limiting subject matter specified by that ratings service so that the filter configuration information may properly specify any filtering configurations to properly identify age limiting subject matter reported by that ratings service.

The filtering configuration information determination process 300 then selects, at 304, a first controlled device as a current controlled device for which filtering configuration information is to be determined. The filtering configuration information determination process 300 proceeds to receive, at 306, a date of birth for a user of the currently selected controlled device. In general, the date of birth of the user is able to be received via any suitable technique. In an example, an administrator, such as a parent of the user, specifies the birthdate of the user through a configuration interface. Specifying the user's birthdate allows the age of the user of the controlled device to be determined at any time in the future, and thus obviates having to update a user's age at various times over many years as that user matures. In other examples, the user's age is able to be obtained from any suitable source, such as from a database containing other information about that user.

The filtering configuration information determination process 300 defines, at 308, age based content filtering rules for each rating service that is to be used by a content filter process for which configuration information is being defined. These age based content filtering rules in an example are based on the date of birth of the user of the currently selected controlled device. In an example, the user's age is determined based on a difference between the specified date of birth and the current date.

A determination is made, at 310, if there are subject matter specifications for the user of the currently controlled device. In an example, an administrator, such as a parent of the user of the currently selected controlled device, is able to specify age limiting subject matter for which content filtering may be modified. In an example, a content filtering for a controlled device may allow content to be provided to the controlled device if the age rating for that content is only due to strong language. In another example, some ratings services may specify positive subject matter, such as strong role models, and content with these subject matters may be allowed to be delivered to the controlled device even though its age ratings may otherwise indicate that it is inappropriate.

If it is determined that there are subject matter specifications for the currently selected controlled device, subject matter specifications are included, at 312, into the content filtering rules for the currently selected device. If it is determined that there aren't subject matter specifications for the currently selected controlled device, or after subject matter specifications are added to the filtering rules, content filtering configurations are defined, at 314, for each ratings service to be used by a content filtering process. In general, the content filtering configurations implement the defined content filtering rules in a format that conforms to the format used by each content rating service.

The defined content filtering configurations for the currently selected controlled device are sent, at 316, to the content filtering devices associated with the currently selected controlled device. Examples of content filtering devices include, but are not limited to, the local network router 102 or the content filtering server 220 that are described above.

A determination is then made, at 318, of whether there are more controlled devices for which content filtering configurations are to be defined. If more content filtering configuration are to be defined, the filtering configuration information determination process 300 selects, at 320, the next controlled device as a currently selected controlled device. The process then returns to receiving, at 306, a date of birth for the user of the newly selected currently selected controlled device and performs the above described subsequent processing.

If there are no more controlled devices for which content filtering configurations are to be determined, a determination is made, at 322, if the age of a user of a controlled device has changed. This determination in an example is based on a difference between the received date of birth of the user and the current date. This determination is repeated from time to time until the determination is true. When the age of a user of a controlled device is determined to have changed, the controlled device of the user with a changed age is selected as the currently selected controlled device, at 324. The filtering configuration information determination process 300 then returns to define, at 308, age based content filtering rules for each rating service and continues with the subsequent processing as is described above.

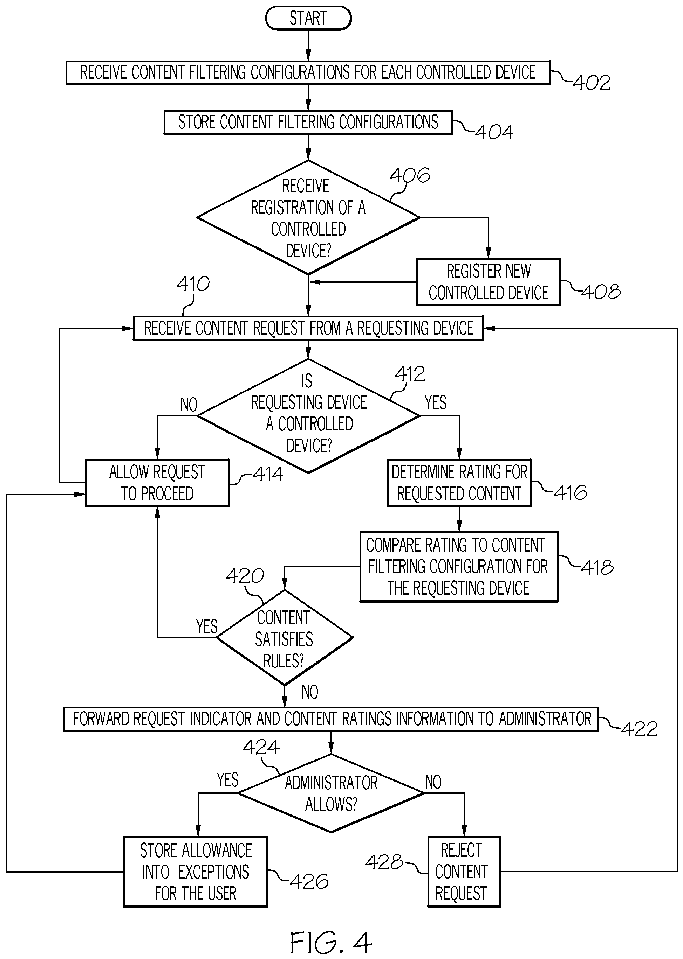

FIG. 4 illustrates a local router content request handling process 400, according to an example. The local router content request handling process 400 is an example of a process performed by the content filter 122 of the local network router 102 described above with regards to FIG. 1.

The local router content request handling process 400 begins by receiving, at 402, content filtering configurations for each controlled device. In an example, the received content filtering configurations are produced by the filtering configuration information determination process 300 as is described above.

The local router content request handling process 400 stores, at 404, the content filtering configurations. In some examples, a determination is made, at 406, if a registration of a controlled device is received. In general, controlled devices are able to register with a content filtering process in some examples to support content filtering operations such as to allow the content filtering process to identify content filtering configurations with the proper controlled device. In further examples, the content filtering process is able to identify controlled devices by any technique that may or may not include registration of the controlled device. For example, a controlled device may be identified based on an identification number associated with and reported by the controlled device, such as a Media Access Control (MAC) address of the device. If a registration of a controlled device is received, the new controlled device is registered, at 408.

After any registration of new controlled devices, a content request from a requesting device is received, at 410. Such a request is able to be any request for content that is to be delivered from a remote source, such as a content server or other content source within the above described content sources 140.

After receiving a content request, a determination is made, at 412, if the requesting device is a controlled device. If the requesting device is not a controlled device, such as the above described uncontrolled device 110, the request is allowed to proceed, at 414.

If it is determined, at 412, that the content request is received from a controlled device, the rating of the requested content is determined, at 416. In an example, the rating is determined based on information received from content rating services 142 as are described above. The determined rating is then compared, at 418, to the content filtering configuration for the requesting controlled device.

A determination is made, at 420, if the rating for the content satisfies the content filtering rules specified by the content filtering configuration. If the content does satisfy the content filtering rules, the content request is allowed to proceed, at 414.

If the rating of the content does not satisfy the content filtering rules, an indication of the content request and the content rating information is forwarded, at 422, to an administrator. In an example, an administrator is able to be a parent of the user of the controlled device. This indication and related information are able to be forwarded to any device associated with the administrator, such as a cellular phone, a computer, other device, or combinations of these. The indication of the request is also able to include detailed information about the requested content, such as the age rating, subject matter descriptions, other information, or combinations of these. The administrator in an example is then able to perform actions, based on receiving this indication, to allow the request to proceed or to cause the request to be rejected. In an example, the administrator's device is able to send a response message to the content filtering process that indicates whether the request should be allowed or rejected.

In some examples, forwarding the request to an administrator, at 422, is able to be conditioned on characteristics of the particular requested media so that the administrator is able to approve the requested content for delivery to the requested device. For example, filtering rules may be configured to send an indication and a request for approval for delivery to the controlled device if the age rating for the requested content is higher than but within a specified range of the user's current age. Conditioning the sending of the indication may further be based upon information provided by the content rating service, such as a specification of an age range for which a parent's approve may be desired. Conditioning the sending of this indication is able to be based upon any one or more criteria.

A determination is made, at 424, as to whether the administrator indicated that the request should be allowed or rejected. Such a determination is able to be based on a response message received from the administrator. If it is determined that the administrator indicates that the request is to be allowed, the indication of allowance for this request is stored, at 426, into exceptions for the user of the controlled device making the request. In an example, storing this exception in association with the user causes requests for this same content to be allowed for any controlled device associated with that user. The content request is then allowed to proceed, at 414.

If it is determined, at 424, that the administrator indicated that the request should not be allowed, the content request is rejected, at 428. Content request rejections are able to be indicated to the requesting controlled device either by an explicit notification that the content is being blocked, or a request rejection notification is able to be provided to the requesting device indicating that the requested content is not available with no explanation being provided.

After allowing a content request to proceed, at 414, or after rejecting the content request at 428, the local router content request handling process 400 returns to receiving, at 410, a content request from a requesting device and continues with the above described subsequent processing.

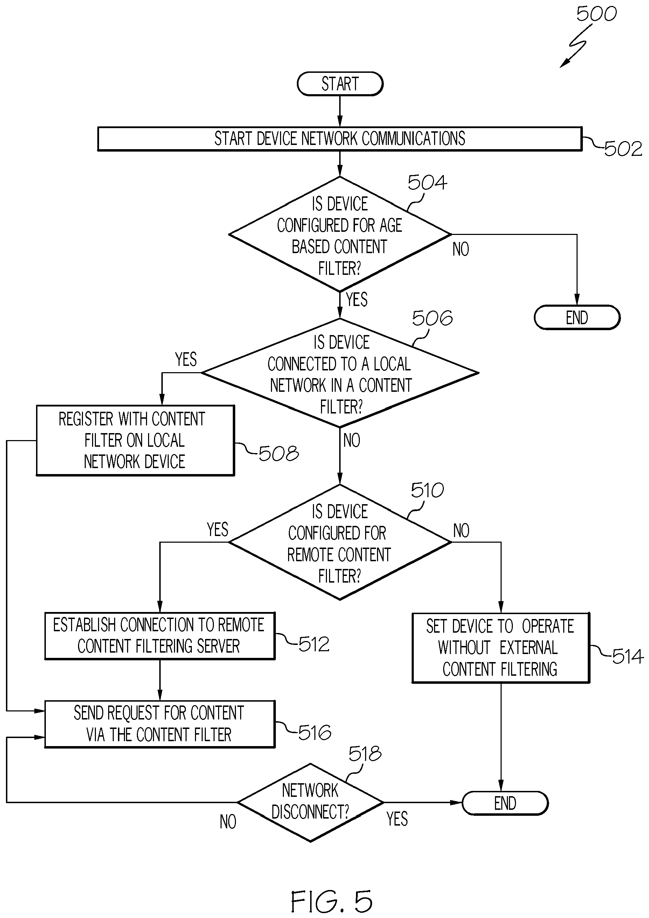

FIG. 5 illustrates a controlled device operation process 500, according to an example. The controlled device operation process 500 is an example of a process performed by a controlled device such as the controlled device 112 used with a content filtering performed by a local network router 102, or the controlled device 210 that operates with a content filtering server 220, as are described above. In an example, one controlled device is able to operate with a local network router 102 and also with a content filtering server 220.

The controlled device operation process 500 starts device network communications, at 502. In an example, device network communications includes establishing a connection through the Internet through a local router or other access point. Establishing this connection in some examples may include connecting to a local network router 102 that includes a content filtering process 122. In some examples, establishing a network connection may not include connecting through a local network router that performs age related content filtering, such as the network access point 202 described above.

A determination is made, at 504, as to whether the device is configured for age based content filtering. If the device is not configured for age based content filtering, the controlled device operation process 500 in an example ends.

If it is determined that the device is configured for age based content filtering, a determination is made, at 506, as to whether the device is connected to a local network that has an age related content filter. An example of such a local network is the local network 104 depicted in FIG. 1 that has a local network router 102 that includes a content filter 122. If it is determined that the device is connected to a local network with an age related content filter, the device in some examples registers, at 508, with the local network device. In some examples, a controlled device is able to register with the device performing age based content filtering. In some examples, no registration is performed for local network operations, so the controlled device operation process 500 does not register with the local network age based content filtering process in such examples.

If it is determined, at 506, that the device is not connected to a local network with an age based content filter, a determination is made, at 510, as to whether the device is configured to operate with a remote content filter. An example of such a remote content filter is the above described content filtering server 220. In some examples, arrangements to make a remote content filter must be made, and may incur additional costs, and a user or administrator, such as the user's parents, may choose not to use remote content filtering for a controlled device.

If it is determined that the device is not configured to operate with a remote content filter, the controlled device operation process 500 sets, at 514, the device to operate without external age related content filtering. In various examples, operating a controlled device without external age based content filtering is able to be implemented via various restrictions on external content access. For example, such a configuration may disable all external data communications, such as by prohibiting all Internet connections. Other examples may implement locally performed age based content filtering, log all requests made from the device, operating the device is any other mode, or combinations of these. The controlled device operation process 500 then ends.

Returning to determining, at 510, as to whether the device is configured to operate with a remote content filter, if it is determined that the device is able to operate with a remote content filter, the controlled device operation process 500 establishes, at 512, a connection to a remote content filtering server. Such a connection may be via, for example, a Virtual Private Network (VPN) connection to the remote content filtering server with the VPN connection configured to route all communications from the controlled device through that remote content filtering server. Routing all communications through a VPN connection causes all data, including all requests for content, to be routed through that VPN connection and thus the remote content filtering server.

After connecting to a local network router that performs age related content filtering, or after establishing a connection to a remote content filtering server, content requests are then sent, at 516, via the content filter. A determination is made, at 518, as to whether the network connection is disconnected. In some examples, this determination includes determining if the network connection to the device has terminated. In some examples, this determination is also able to include determining whether a connection to the remote content filtering server, such as by a disconnection of the above described VPN connection, occurred. If the network connection is not determined to be disconnected, content requests are sent, at 516, via the content filter. If the network connection is determined to be disconnected, the controlled device operation process 500 ends.

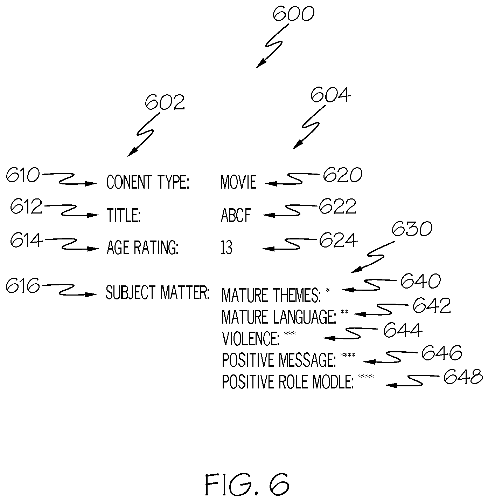

FIG. 6 illustrates content rating information 600, according to an example. The illustrated content rating information 600 depicts information that could be provided by one or more content rating services 142 for a movie. In general, content rating information is able to include any type of information in various combinations as could be used to base content filtering based on the age of a user of a controlled device.

The content rating information 600 includes a data field label column 602 and a data column 604. The content rating information 600 has a "Content Type" field 610 with a content indicator data 620 equal to "Movie" in the data column 604. A field labeled "Title" 612 has "Title" data 622 indicating that the title is "ABC.". A field labeled "Age Rating" 614 indicates the age rating for the movie and in this example has "Age Rating" data 624 equal to "13." Such information is able to be used to correlate a content request from a controlled device with the rating information, such as is indicated by the "Content Type" field 610 or "Title" field 612. The "Age Rating" data 624 indicates that the content is appropriate for children 13 years of age or older. In some examples, content filtering based on age is able to be performed by comparing the present age of a user associated with a controlled device requesting the content to the specified "Age Rating" data 624. In this example, if the present age of the user associated with the requesting device is 13 or older, the content request is approved. If the present age of that user is less than 13, the request in some examples is simply rejected. In some examples, if the present age of the user is below the minimum age in the content rating information 600, the request not immediately rejected but rather an indication of the request and the content rating information 600 are forwarded to an administrator, such as the user's parent, for further consideration and possible manual approval as discussed above.

The illustrated content rating information 600 further includes subject matter specifications. In the illustrated example, a field labeled "Subject Matter" 614 includes an age limiting subject matter list 630 for this content. In the illustrated example, the age limiting subject matter list 630 for the content, i.e., for the movie "ABC," includes an entry for "Mature Themes" 640. The "Mature Themes" 640 entry has one star indicating that the content does not contain very intense "Mature Themes," but enough to cause "Mature Themes" 640 to be considered in the rating of the content.

The illustrated age limiting subject matter list 630 for the content further lists "Mature Language" 642, but with no stars. The absence of stars for this entry indicates that "Mature Language" is not present in this movie. "Violence" 644 is also indicated with three stars, indicating that it is more prevalent than "Mature Themes" 640 in determining the age rating for this movie. The illustrated age limiting subject matter list 630 includes positive subject matter for the movie, such as "Positive Message" 646 and "Positive Role Model" 648, which both have four stars in this example. In various examples, the illustrated age limiting subject matter list 630 is able to be used to further base content filtering determinations either via automatic processing or to support manual authorizations to be made by an administrator. For example, a content filter configuration may allow content that has an age rating only based on one or more specified subject matters, such as a rating based only on "Mature Language," or rating based on "Mature Language" and "Violence," to be allowed to be delivered to the controlled device.

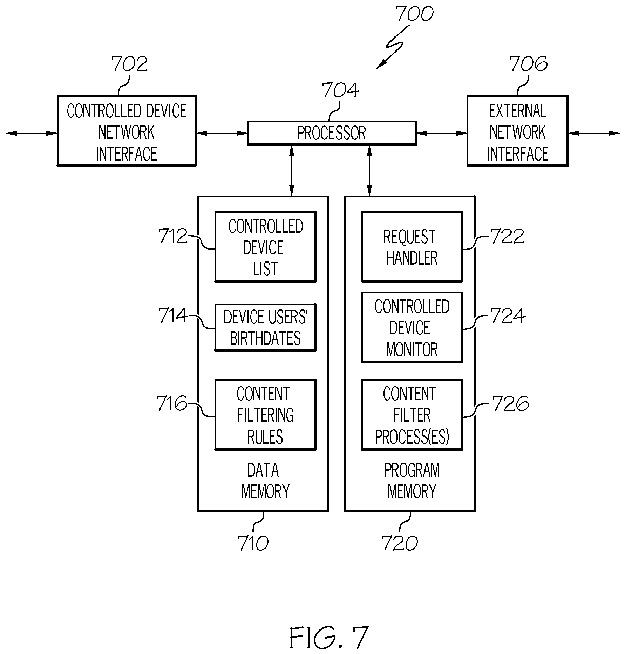

FIG. 7 illustrates a content filtering processor 700, according to an example. The content filtering processor 700 is an example of a processing configuration to implement the content filter 122 of the local network router 102 or the content filter 222 of the content filtering server 220 that are discussed above. The content filtering processor 700 is able to be implemented in any processing configuration that is able to incorporate a single data processor, multiple data processors, distributed processing resources, any processing architecture, or combinations of these.

The content filtering processor 700 includes a controlled device network interface 702 that provides data connections between controlled devices and the content filtering processor 700. The controlled device network interface 702 is able to be any type of data communications interface to the controlled devices. For example, the controlled device network interface 702 is able to include a local network interface of a local network router 102, a server interface, such as a Virtual Private Network (VPN) interface, implemented for the content filtering server 220, any suitable interface, or combinations of these. The controlled device network interface 702 exchanges data between controlled devices and the processor 704.

The processor 704 is able to be implemented with any suitable architecture, such as by a single processor, multiple processors, distributed processors, any other type of processor, or combinations of these. The processor 704 is in communications with a program memory 720 and a data memory 710. The program memory 720 includes executable programs to implement various functions of the content filtering processor 700. The program memory 720 of the illustrated example includes a request handler program 722 that processes requests for content that are received from various devices, including controlled devices. The program memory 720 further includes a controlled device monitor program 724 that monitors controlled devices connected to the content filtering processor 700. The program memory 720 also has a content filter process(es) program 726. As discussed above, a content filter processor is able to have multiple content filtering processes to handle requests for various types of content. For example, the content filtering processing performed for requests downloading a movie may be different than the content filtering processing performed for requests to play an online game.

The illustrated data memory 710 includes a controlled device list 712. The controlled device list 712 in various examples is able to include a mapping between particular controlled devices and information about users associated with those devices. The age related content filtering performed for the controlled devices in some examples is based on the present age of the user associated with the controlled device. In such examples, the controlled device list includes the current age of the user associated with the controlled device as well as an identification of the user himself or herself.

The data memory 710 further includes device user's birthdates 714. In an example, the processor 704 is able to determine the present age of a user associated with a controlled device based on the time difference between the present date and the birthdate of the user. The processor 704 in some examples is able to automatically update this present age based on the stored device user's birthdate. In an example, the processor 704 allows an authorized user, such as an administrator, to enter the birthdate of each user associated with a controlled device. In such examples, the processor 704 is able to access this birthdate, determine the user's age, and perform processing to automatically determine content filtering configurations.

The data memory 710 also stores content filtering rules 716. The content filtering rules 716 in an example are able to be based upon content filtering configuration data that is received from any suitable source. As described above, various facilities are able to be used to specify content filter configurations from which content filtering rules 716 are able to be determined. In some examples the processor 704 is able to determine the content filtering rules 716 based upon information entered by an authorized user. In some examples, a remote processor is able to determine content filtering configurations to be provided to the content filtering processor 700. Such content filtering configurations are able to in some examples, directly specify the content filtering rules. In some examples, received content filtering configuration data is used by the processor 704 and processing within processor 704 determines the content filtering rules 716 stored in the data memory 710 and used by content filtering processing performed by the content filtering processor 700.

The content filtering processor 700 includes an external network interface 706. The external network interface 706 exchanges data with the processor 704 to communicate with external data communications networks, such as the Internet. The external network interface 706 is able to be a wide area network (WAN) interface of the local network router 102 or an external data interface of the content filtering server 220 to the Internet that is not restricted to a VPN connection established between the content filtering server 220 and controlled devices.

In an example, the content filtering processor 700 includes a data interface that includes, but is not limited to, the controlled device network interface 702 and the external network interface 706. This data interface implements interfaces with various components. In some examples, the data interface is able to consist of one data communications structure or multiple data communications structures that are each able to communicate the various other devices. In various examples, the data interface performs data exchanges with components that are external to the content filtering processor 700, internal to the content filtering processor 700, or with components where some are external and others are internal to the content filtering processor 700. In some examples, the data interface of the content filtering processor 700 exchanges data with the content filter configuration definition processor 150 to receive, for example, birthdates and other data associated with data stored in the data memory 710. The data interface of that example further exchanges data with controlled devices to receive content requests and send content to the device. In an example, the data interface establishes a local area network connection or a data tunneling connection between the controlled devices and the content filtering processor 700 as is described above.

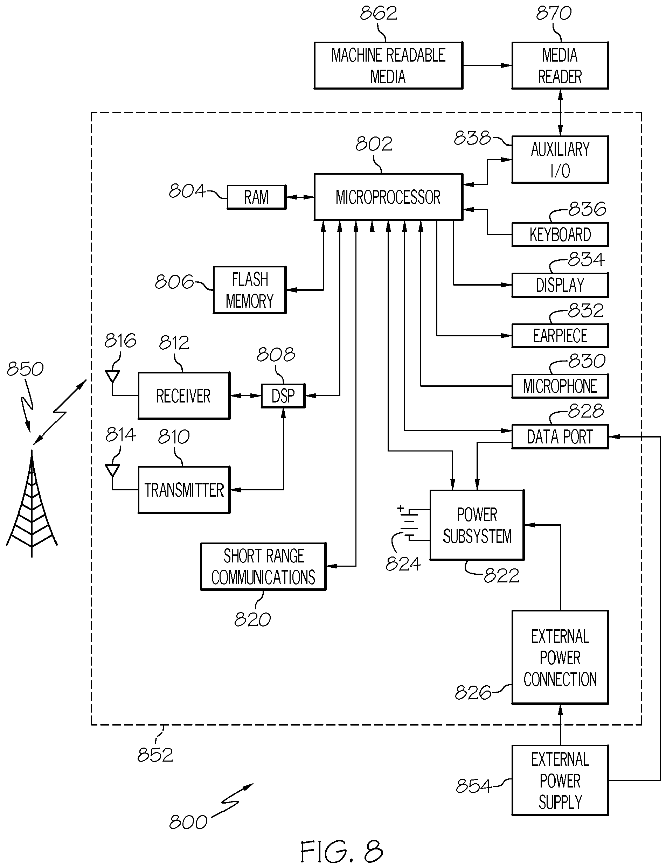

FIG. 8 is a block diagram of an electronic device and associated components 800 in which the systems and methods disclosed herein may be implemented. In various examples, the electronic device 852 is able to be an example of the above controlled device 210 or the above described uncontrolled device 110. The electronic device 852 is an example of a wireless two-way communication device with one or more of the following: voice, text, and data communication capabilities. Such electronic devices communicate with a wireless voice, text, or data network 850 using a suitable wireless communications protocol. Wireless voice communications may be performed using either an analog or digital wireless communication channel. Data communications allow the electronic device 852 to communicate with other computer systems via the Internet. Examples of electronic devices that are able to incorporate the above described systems and methods include, for example, a data messaging device, a two-way pager, a cellular telephone with text and data messaging capabilities, a wireless Internet appliance or a data communication device that may or may not include telephony capabilities.

The illustrated electronic device 852 is an example electronic device that includes two-way wireless communications functions. Such electronic devices may incorporate communication system elements such as a wireless transmitter 810, a wireless receiver 812, and associated components such as one or more antenna elements 814 and 816. A digital signal processor (DSP) 808 performs processing to extract data from received wireless signals and to generate signals to be transmitted. The particular design of the communication system may be dependent upon the communication network and associated wireless communications protocols with which the device is intended to operate.

The electronic device 852 includes a microprocessor 802 that controls the overall operation of the electronic device 852. The microprocessor 802 interacts with the above described communications system elements and also interacts with other device systems. In various examples, the electronic device 852 is able to include one or more of various components such as a data storage 806, random access memory (RAM) 804, auxiliary input/output (I/O) device 838, data port 828, display 834, keyboard 836, earpiece 832, audio sound reproduction system 870, microphone 830, a short-range communications system 820, a power system 822, other systems, or combinations of these.

One or more power storage or supply elements, such as a battery 824, are connected to a power system 822 to provide power to the circuits of the electronic device 852. The power system 822 includes power distribution circuitry for providing power to the electronic device 852 and also contains battery charging circuitry to manage recharging the battery 824 (or circuitry to replenish power to another power storage element). The power system 822 receives electrical power from external power supply 854. The power system 822 is able to be connected to the external power supply 854 through a dedicated external power connector (not shown) or through power connections within the data port 828. The power system 822 includes a battery monitoring circuit that is operable to provide a status of one or more battery status indicators, such as remaining capacity, temperature, voltage, electrical current consumption, and the like, to various components of the electronic device 852.

The data port 828 is able to support data communications between the electronic device 852 and other devices through various modes of data communications, such as high speed data transfers over an optical communications circuits. Data port 828 is able to support communications with, for example, an external computer or other device. In some examples, the data port 828 is able to include electrical power connections to provide externally provided electrical power to the electronic device 852, deliver electrical power from the electronic device 852 to other externally connected devices, or both. Data port 828 of, for example, an electronic accessory is able to provide power to an electronic circuit, such as microprocessor 802, and support exchanging data between the microprocessor 802 and a remote electronic device that is connected through the data port 828.

Data communication through data port 828 enables a user to set preferences through the external device or through a software application and extends the capabilities of the device by enabling information or software exchange through direct connections between the electronic device 852 and external data sources rather than via a wireless data communication network. In addition to data communication, the data port 828 provides power to the power system 822 to charge the battery 824 or to supply power to the electronic circuits, such as microprocessor 802, of the electronic device 852.

Operating system software used by the microprocessor 802 is stored in data storage 806. Examples of data storage 806 are able to include, for example, flash memory, magnetic based storage devices, other volatile or non-volatile data store elements, or the like. The data storage 806 is an example is able to include the above described data memory 710. Some examples are able to use data storage 806 that includes a battery backed-up RAM or other non-volatile storage data elements to store operating systems, other executable programs, or both. The operating system software, device application software, or parts thereof, are able to be temporarily loaded into volatile data storage such as RAM 804. Data received via wireless communication signals or through wired communications are also able to be stored to RAM 804. The microprocessor 802 in some examples includes a component, such as is able to be defined in data storage 806 in one example, that include the processes described above that are stored in the program memory 720.

The microprocessor 802, in addition to its operating system functions, is able to execute software applications on the electronic device 852. A set of applications that control basic device operations, including at least data and voice communication applications, is able to be installed on the electronic device 852 during manufacture. In an example, programs and other data used to support the processes described above are able to be installed in the memory of the electronic device 852. Further examples of applications that are able to be loaded onto the device may be a personal information manager (PIM) application having the ability to organize and manage data items relating to the device user, such as, but not limited to, e-mail, calendar events, voice mails, appointments, and task items. The applications are able to include the above described base applications, which may be installed during manufacture or from another trusted and verified source, along with user applications that may be installed at any time.

Further applications may also be loaded onto the electronic device 852 through, for example, the wireless network 850, an auxiliary I/O device 838, Data port 828, short-range communications system 820, or any combination of these interfaces. Such applications are then able to be installed by a user in the RAM 804 or a non-volatile store for execution by the microprocessor 802.

In a data communication mode, a received signal such as a text message or web page download is processed by the communication system, including wireless receiver 812 and wireless transmitter 810, and communicated data is provided the microprocessor 802, which is able to further process the received data. In some examples, the electronic device 852 includes a display, output ports, or combinations of these. In such examples, the received data is able to be processed for output to the display 834, or alternatively, to an auxiliary I/O device 838 or the Data port 828. In examples of the electronic device 852 that include a keyboard 836 or other similar input facilities, a user of the electronic device 852 may also compose data items, such as e-mail messages, using the keyboard 836, which is able to include a complete alphanumeric keyboard or a telephone-type keypad, in conjunction with the display 834 and possibly an auxiliary I/O device 838. Such composed items are then able to be transmitted over a communication network through the communication system.

For voice communications, overall operation of the electronic device 852 is substantially similar, except that received signals are generally provided to an earpiece 832 and signals for transmission are generally produced by a microphone 830. Alternative voice or audio I/O systems, such as a voice message recording system, may also be implemented on the electronic device 852. Although voice or audio signal output is generally accomplished primarily through the earpiece 832, in examples of electronic devices 852 that include a display 834, the display 834 may also be used to provide an indication of the identity of a calling party, the duration of a voice call, or other voice call related information, for example.

Depending on conditions or statuses of the electronic device 852, one or more particular functions associated with a system circuit may be disabled, or an entire system circuit may be disabled. For example, if the battery temperature is low, then voice functions may be disabled, but data communications, such as e-mail, may still be enabled over the communication system.

A short-range communications system 820 provides for data communication between the electronic device 852 and different systems or devices, which need not necessarily be similar devices. For example, the short-range communications system 820 includes an infrared device and associated circuits and components or a Radio Frequency based communication module such as one supporting Bluetooth^{®} communications, to provide for communication with similarly-enabled systems and devices, including the data file transfer communications described above. The short-range communications system is also able to include one or more of components to support communications over wireless links such as Wi-Fi^{®}, Near Field Communications (NFC), any other short range link, or combinations of these

A media reader 860 is able to be connected to an auxiliary I/O device 838 to allow, for example, loading computer readable program code of a computer program product into the electronic device 852 for storage into flash memory 806. One example of a media reader 860 is an optical drive such as a CD/DVD drive, which may be used to store data to and read data from a computer readable medium or storage product such as computer readable storage media 862. Examples of suitable computer readable storage media include optical storage media such as a CD or DVD, magnetic media, or any other suitable data storage device. Media reader 860 is alternatively able to be connected to the electronic device through the Data port 828 or computer readable program code is alternatively able to be provided to the electronic device 852 through the wireless network 850.

### Information Processing System

The present subject matter can be realized in hardware, software, or a combination of hardware and software. A system can be realized in a centralized fashion in one computer system, or in a distributed fashion where different elements are spread across several interconnected computer systems. Any kind of computer system - or other apparatus adapted for carrying out the methods described herein - is suitable. A typical combination of hardware and software could be a general purpose computer system with a computer program that, when being loaded and executed, controls the computer system such that it carries out the methods described herein.

The present subject matter can also be embedded in a computer program product, which comprises all the features enabling the implementation of the methods described herein, and which - when loaded in a computer system - is able to carry out these methods. Computer program in the present context means any expression, in any language, code or notation, of a set of instructions intended to cause a system having an information processing capability to perform a particular function either directly or after either or both of the following a) conversion to another language, code or, notation; and b) reproduction in a different material form.

Each computer system may include, inter alia, one or more computers and at least a computer readable medium allowing a computer to read data, instructions, messages or message packets, and other computer readable information from the computer readable medium. The computer readable medium may include non-transitory computer readable storage medium embodying non-volatile memory, such as read-only memory (ROM), flash memory, disk drive memory, CD-ROM, and other permanent storage. Additionally, a computer medium may include volatile storage such as RAM, buffers, cache memory, and network circuits. Furthermore, the computer readable medium may comprise computer readable information in a transitory state medium such as a network link and/or a network interface, including a wired network or a wireless network, that allow a computer to read such computer readable information.

### Non-Limiting Examples

Although specific embodiments of the subject matter have been disclosed, those having ordinary skill in the art will understand that changes can be made to the specific embodiments without departing from the spirit and scope of the disclosed subject matter. The scope of the disclosure is not to be restricted, therefore, to the specific embodiments, and it is intended that the appended claims cover any and all such applications, modifications, and embodiments within the scope of the present disclosure.

## Claims

1. A computer-implemented method performed by a content filtering device, the method comprising:
receiving a birthdate for a user associated with a controlled device;
determining, based on the birthdate, a present age of the user associated with the controlled device;
receiving, from the controlled device, a request for content;
storing at least one age limiting subject matter definition in association with an indication of the controlled device, the at least one age limiting subject matter definition having an intensity rating;
comparing an age rating associated with the content to the present age of the user; and
allowing, based on comparing the age rating to the present age of the user and the intensity rating of the at least one age limiting subject matter definition, the content to be delivered to the controlled device.

2. The method of claim 1, further comprising:
receiving an age adjustment specification for the user, and
wherein comparing an age rating associated with the content with the present age of the user further comprises determining that the age rating associated with the content is at least a combination of the present age of the user and the age adjustment.

3. The method of claim 1 or 2, further comprising:
storing age limiting subject matter definition exceptions in association with an indication of the controlled device;
determining the age rating is based on age limiting subject matter corresponding to the age limiting subject matter definition exceptions; and
allowing, based on determining the age rating is based on age limiting subject matter corresponding to the age limiting subject matter definition exceptions, the content to be delivered to the controlled device.

4. The method of any preceding claim, further comprising:
establishing a local area network connection between the controlled device and a local network router with a content filtering process performing the comparing; and
receiving the request via the local area network.

5. The method of any preceding claim, further comprising:
establishing a data tunneling connection between the controlled device a content filtering process performing the comparing; and
receiving the request via the data tunneling connection.

6. The method of any preceding claim, further comprising:
sending, based on determining that the age rating associated with the content is greater than the present age of the user, a notification to an administrator's device, the notification comprising:
an indication of the request, and
age related rating information for the content;
receiving, from the administrator's device, an indication to allow the content to be delivered; and
allowing, based on the indication to allow the content to be delivered, the content to be delivered to the controlled device.

7. The method of claim 6, wherein sending the notification is further based on a determination that the age rating associated with the content is within a defined range of the present age of the user.

8. A content filtering device, comprising:
a data interface that, when operating:
receives a birthdate for a user associated with a controlled device; and
receives, from the controlled device, a request for content; and
a content filter that, when operating:
determines, based on the birthdate, a present age of the user associated with the controlled device;
stores at least one age limiting subject matter definition in association with an indication of the controlled device, the at least one age limiting subject matter definition having an intensity rating;
compares an age rating associated with the content to the present age of the user; and
allows, based on comparing the age rating to the present age of the user and the intensity rating of the at least one age limiting subject matter definition, the content to be delivered to the controlled device.

9. The device of claim 8, wherein:
the data interface, when operating, further receives an age adjustment specification for the user, and
the content filter, when operating, compares an age rating associated with the content with the present age of the user by further determining that the age rating associated with the content is at least a combination of the present age of the user and the age adjustment.

10. The device of claim 8 or 9, wherein the content filter, when operating, further:
stores age limiting subject matter definition exceptions in association with an indication of the controlled device;
determines the age rating is based on age limiting subject matter corresponding to the age limiting subject matter definition exceptions; and
allows, based on determining the age rating is based on age limiting subject matter corresponding to the age limiting subject matter definition exceptions, the content to be delivered to the controlled device.

11. The device of any one of claims 8 to 10, wherein the data interface, when operating, further:
establishes a local area network connection between the controlled device and a local network router with a content filtering process performing the comparing; and
receives the request via the local area network.

12. The device of any one of claims 8 to 11, wherein the data interface, when operating, further:
establishing a data tunneling connection between the controlled device a content filtering process performing the comparing; and
receiving the request via the data tunneling connection.

13. The device of any one of claims 8 to 12, wherein the content filter, when operating, further:
sends, based on determining that the age rating associated with the content is greater than the present age of the user, a notification to an administrator's device, the notification comprising:
an indication of the request, and
age related rating information for the content;
receives, from the administrator's device, an indication to allow the content to be delivered; and
allows, based on the indication to allow the content to be delivered, the content to be delivered to the controlled device.

14. The device of claim 13, wherein the content filter, when operating, further sends the notification based on a determination that the age rating associated with the content is within a defined range of the present age of the user.

15. A computer program which when executed on a device is configured to carry out the method of any one of claims 1 to 7.
